# EUROPÄISCHE PATENTSCHRIFT

(11) **EP 0 554 423 B1**
(45) Veröffentlichungstag und Bekanntmachung des Hinweises auf die Patenterteilung: **15.11.1995**
(21) Anmeldenummer: 92916979.5
(22) Anmeldetag: 06.08.1992
(51) Int. Cl.: B30B 11/22, A23P 1/14

(54) **VERFAHREN UND VORRICHTUNG ZUM HERSTELLEN EXPANDIERTER PRODUKTE**
PROCESS AND DEVICE FOR MAKING EXPANDED PRODUCTS
PROCEDE ET DISPOSITIF POUR LA FABRICATION DE PRODUITS EXPANSES

(30) Priorität: 22.08.1991 DE 4127811
(43) Veröffentlichungstag der Anmeldung: 11.08.1993
(73) Patentinhaber: SCHAAF TECHNOLOGIE GMBH, D-65520 Bad Camberg (DE)
(72) Erfinder: SCHAAF, Heinz-Josef, D-6277 Camberg (DE)
(74) Vertreter: Lewald, Dietrich, Dipl.-Ing.
(86) Internationale Anmeldenummer: EP9201783
(87) Internationale Veröffentlichungsnummer: WO9303912

(56) Entgegenhaltungen:
- EP-A- 0 286 098
- DE-C- 3 515 617
- FR-A- 2 515 934
- US-A- 4 051 162
- US-A- 4 802 838

## Beschreibung

Die Erfindung betrifft ein Verfahren zum Herstellen expandierter Produkte, wobei die Produkte extrudiert und geschnitten werden und verminderter Druck beim Düsenaustritt angelegt wird.

Gegenstand der Erfindung ist auch eine Vorrichtung zur Herstellung expandierter Produkte mit Extruder, einschließlich Schnecke, Düseneinsatz und Schneidmessern, sowie einer Unterdruck erzeugenden Vorrichtung im Bereich des Düsenaustritts.

Konstruktive Lösungen sind schon entwickelt worden, bei denen einerseits direkt ins heiße Medium extrudiert wurde, mit dem Vorteil einer besonders vorteilhaften Expansion und eine andere Lösung, bei der nicht auf die Wärme, sondern zur Steigerung der Expansion auf verminderten Druck (Vakuum) gesetzt wurde, siehe z.B. DE-A-3515617.

Zur Herstellung des verminderten Drucks (Vakuum) war bisher, um den Unterdruck vor der Düse aufrechtzuerhalten, ein erheblicher apparativer Aufwand notwendig, nämlich ein geschlossenes System einschließlich Vakuumpumpe, Kondensator, Austragsschleusen etc..

Der Erfindung liegt die Aufgabe zugrunde, einerseits den apparativen Aufwand eines solchen geschlossenen Systems bei mindestens gleich guten oder besseren Ergebnissen zu überwinden und weiterhin Lösungen für die Extrusion beispielsweise einfach in Umgebungsluft zu bieten und zu verbessern.

Weiterhin ist bekannt, daß bei der Extrusion in heißes Fett bekanntlich Textur verbessernde bzw. die Expansion verbessernde Effekte eintreten.

Gelöst wird diese Aufgabe erfindungsgemäß bei einem Verfahren der eingangs genannten Art dadurch, daß die Schneidklingen so angestellt sind, daß die Fläche der Schneidklingen schiffsschraubenartig zur Erzeugung verminderten Drucks an der Stelle, an der das Extrudat aus der Düse austritt, ausgebildet wird.

Die Konstruktion kann auf Zug ausgelegt werden (im Gegensatz zu der häufigeren Ausbildung bei Schiffsschraubenkonstruktionen, die auf Schub arbeiten).

Die Messer(flügel) können verstellbar ausgebildet sein.

Die Messer(schraubenflügel) können mit einer geraden Erzeugenden arbeiten.

Die Anwendung des Verfahrens auf die Herstellung von Lebensmitteln ist als besonders bevorzugt anzusehen.

Die Lösung im Vorrichtungsbereich geht aus von einer Vorrichtung der oben genannten Art und zeichnet sich dadurch aus, daß die Schneidklingen strahlenförmig nach Art einer Schiffsschraube ausgebildet sind und um eine sich drehende Achse unter einem solchen Winkel angestellt sind und deren Profil derart gestaltet ist, daß am Düsenaustritt des Extrudats verminderter Druck erzeugt wird.

Durch die Maßnahme nach der Erfindung ist es möglich, besondere Effekte zu erreichen, wenn das Schneidmesser im Öl unmittelbar an der Düse vorbeistreicht. Hierbei erfolgt das direkte Schneiden in heißem Fett unmittelbar an der Düse, was zu einer Oberflächenvergrösserung führt: die Wärmeübertragung auf das Produkt wird noch gesteigert.

Durch die Gestaltung des strahlenförmig ausgebildeten sich um eine Achse drehenden Schneidmessers in einer Ausbildung ähnlich wie bei einer Schiffsschraube stellt sich bei den üblichen Drehzahlen (in Luft wie auch besonders in Flüssigkeit) eine erhebliche Pumpwirkung entsprechend der Winkelstellung der Schneidklingen ein.

Die Pumpwirkung ruft einen entsprechenden Unterdruck unmittelbar an der Schneidkante der Klingen hervor. Vorzugsweise ist es möglich, zwischen je zwei Propellerschaufeln eine venturiartige Beschleunigungsstrecke hervorzurufen.

Der Unterdruck bewirkt bei der Extrusion in heisse Flüssigkeit unmittelbar am Düsenausgang eine beachtliche Expansionssteigerung bzw. eine ausreichend hohe Expansion bei erheblich, niedrigeren Teigtemperaturen mit den damit verbundenen Vorteilen.

Zur Ergänzung wird auf die Propeller-Theorie zum genauen Aufbau der Propeller(Schiffsschrauben)-Flügel, der Druck- und Strömungsverteilung etc. verwiesen (z.B. Lueger, Band 12, 1967, S. 457-464).

Ein ganz besonderer Vorteil ist, daß zur Aufrechterhaltung des Unterdrucks vor der Düse auf den erheblichen apparativen Aufwand wie geschlossenes System, Vakuumpumpe, Kondensator, Austragsschleusen etc. verzichtet werden kann. Erstaunlich ist, daß alle Vorteile der Vakuumextrusion und sämtliche Vorteile der Maßnahme der Extrusion ins heiße Medium hier geltend zu machen sind.

Messbar ist der Effekt sogar bei der bisherigen Extrusion, d.h. der Extrusion in Luft: durch strömungstechnische Optimierung der Schneidmesserform lassen sich hier beachtliche Verbesserungen erzielen.

Es ist möglich, daß (wie üblich) die gemeinsame Propellerachse der Schneidmesser parallel unter Abstand zur Düsenachse vorgesehen ist.

Nach einer anderen Ausführungsform ist es vorzugsweise möglich, mehrere Düsenaustritte in konzentrischer Ringanordnung vorzusehen. Die Messer sind dann konzentrisch zu dieser Ringanordnung ebenfalls angeordnet und überstreichen die Düsenaustritte knapp.

Bei der Extrusion ins heiße Medium, insbesondere Öl, sind die Messer unmittelbar an der Düse vorbeistreichend angeordnet.

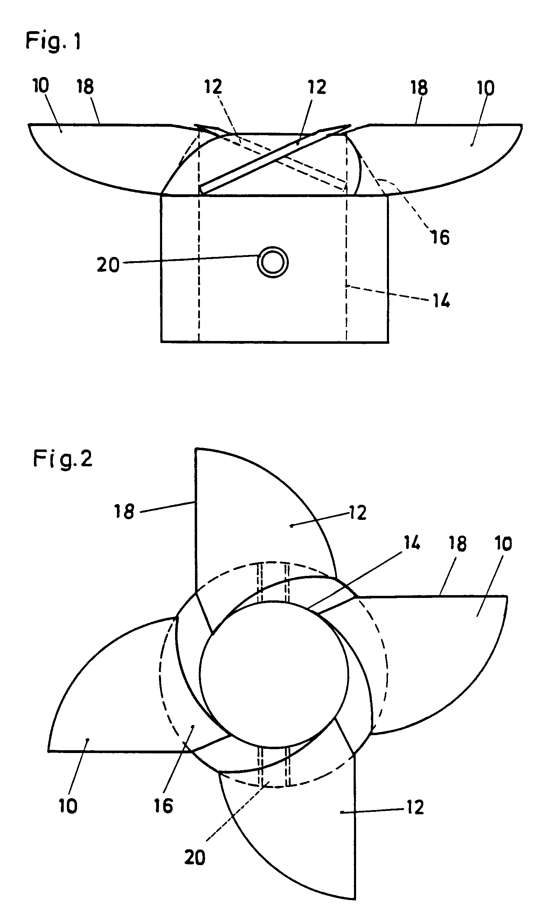

Eine beispielsweise Ausführungsform der Erfindung soll nun mit bezug auf die beiliegende Zeichnung näher erläutert werden, deren
- Figur 1: eine Ansicht,
deren
- Figur 2: eine Draufsicht
eines Messerkopfes mit vier Klingen zeigt.

An einer geraden Nabe 14, die oben bei 16 konisch zuläuft, sitzen im Ausführungsbeispiel vier Messerklingen 10, 12 die im Ausführungsbeispiel plan sind und gleichmässigen Abstand haben. Man erkennt die Anstellung der Messerklingen 10, 12 in der Ansicht gut. Der Winkel kann beispielsweise 30° gegenüber der Waagerechten betragen. Die Messerklingen haben gerade Schneiden 18, die dazu bestimmt sind, eng an der Düsenaustrittsöffnung (nicht gezeigt) entlang den Strang zu schneiden.

Die Rückseite der Messer ist gekrümmt. Der ganze Messerkopf wird dadurch gehalten, daß in die Gewindebohrung 20 ein Gewindestift eingeschraubt wird.

Man kann den Effekt demonstrieren, wenn man diese Messer probeweise in Wasser betreibt. Das Wasser kann hierbei bei unterschiedlichen Temperaturen benutzt werden, um die Winkelstellung der Messer durch Beobachten des Auftretens des Unterdrucks in bestimmten Bereichen zu optimieren. Die Modifizierung erfolgt bei verschiedenen Drehzahlen, d.h. Schnittgeschwindigkeiten. Es wird beobachtet, in welcher Zone der Schneidkante der Unterdruck sich einstellt. Aus der Dampfdrucktabelle sind sogar genaue Werte ablesbar. Bei solchen Modellversuchen kann auch der Unterdruck an die Stelle, wo er gewollt ist, gebracht werden. Der Unterdruck sollte immer am Austritt Düse auftreten.

Zur Steigerung des Wirkungsgrades bzw. des Unterdrucks kann in Weiterbildung der Erfindung die schiffsschraubenartige Ausbildung in einer Art Düsenmantel (die Messer sind natürlich frei) angeordnet sein.

## Patentansprüche

1. Verfahren zum Herstellen expandierter Produkte, die extrudiert und geschnitten werden und verminderter Druck beim Düsenaustritt angelegt wird, dadurch gekennzeichnet, daß die Schneidklingen (10, 12) so angestellt sind, daß die Fläche der Schneidklingen schiffsschraubenartig zur Erzeugung verminderten Drucks an der Stelle, an der das Extrudat aus der Düse austritt, ausgebildet ist.

2. Verfahren nach Anspruch 1, dadurch gekennzeichnet, daß eine auf Zug ausgelegte schiffsschraubenartige Konstruktion verwendet wird.

3. Verfahren nach einem der vorhergehenden Ansprüche, dadurch gekennzeichnet, daß mit verstellbaren Messern (Flügeln) gearbeitet wird.

4. Verfahren nach einem der vorhergehenden Ansprüche, dadurch gekennzeichnet, daß mit Messer (Schraubenflügeln) mit gerader Erzeugenden gearbeitet wird.

5. Anwendung des Verfahrens nach einem der vorhergehenden Ansprüche auf die Herstellung expandierter Lebensmittel.

6. Vorrichtung zur Herstellung expandierter Produkte mit Extruder einschließlich Schnecke, Düseneinsatz und Schneidmesser (10; 12) und einer Unterdruck erzeugenden Vorrichtung im Bereich des Düsenaustritts, dadurch gekennzeichnet, daß die Schneidklingen (10; 12) strahlenförmig nach Art einer Schiffsschraube (Fig. 1, Fig. 2) ausgebildet sind und um eine sich drehende Achse unter einem solchen Winkel angestellt sind und deren Profil derart gestaltet ist, daß am Düsenaustritt des Extrudats verminderter Druck erzeugt wird.

7. Vorrichtung nach Anspruch 6, dadurch gekennzeichnet, daß die schiffsschraubenartige Ausbildung als auf sogenannten Zug arbeitender Propeller ausgebildet ist.

8. Vorrichtung nach einem der Ansprüche 6 bis 7, dadurch gekennzeichnet, daß mehrere Düsenaustritte in um die Messerachse konzentrischer Ringanordnung vorgesehen sind und die hierzu ebenfalls konzentrisch angeordneten Messer die Düsenaustritte knapp überstreichen.

9. Vorrichtung nach einem der Ansprüche 6 bis 8, dadurch gekennzeichnet, daß die Düsen parallel zur Messerachse in heißem Medium, insbesondere Öl, angeordnet und die Messer unmittelbar an der Düse vorbeistreichend angeordnet sind.

10. Vorrichtung nach einem der Ansprüche 6 bis 9, dadurch gekennzeichnet, daß der Düsenkopf mit hohler Nabe (14) durch Stiftverschraubung (20) gegen die Antriebswelle gesichert ist.

11. Vorrichtung nach einem der Ansprüche 6 bis 10, dadurch gekennzeichnet, daß die Messerklingen (10) plan sind und die Schneidkanten (18) gerade in einer Ebene senkrecht zur Nabenachse ausgebildet sind.

12. Vorrichtung nach einem der Ansprüche 6 bis 11, dadurch gekennzeichnet, daß die Nabe, insbesondere auf 4 mm, geschlitzt ist.

## Claims

1. Process for making expanded products which are extruded and cut, and reduced pressure being applied at the die outlet, characterized in that the cutting blades (10,12) are set so that the face of the cutting blades is designed in the manner of a ship's propeller for generating a reduced pressure at the point at which the extrudate emerges from the die.

2. Process according to Claim 1, characterized in that a construction, in the manner of a ship's propeller, which is designed for tensile stress is used.

3. Process according to one of the preceding claims, characterized in that work is carried out with adjustable knives (vanes).

4. Process according to one of the preceding claims, characterized in that work is carried out with knives (propeller vanes) having a straight generatrix.

5. Use of the process according to one of the preceding claims for making expanded foodstuffs.

6. Device for making expanded products, with an extruder including worm, die insert and cutting knife (10; 12) and with a vacuum-generating device in the region of the die outlet, characterized in that the cutting blades (10; 12) are designed to radiate in the manner of a ship's propeller (Figure 1, Figure 2) and are set about a rotating axis at such an angle and their profile has such a shape that a reduced pressure is generated at the die outlet of the extrudate.

7. Device according to Claim 6, characterized in that the design in the manner of a ship's propeller takes the form of a propeller working under so-called tensile stress.

8. Device according to one of Claims 6 and 7, characterized in that a plurality of die outlets are provided in a ring arrangement concentric about the knife axis and the knives likewise arranged concentrically thereto just sweep over the die outlets.

9. Device according to one of Claims 6 to 8, characterized in that the dies are arranged parallel to the knife axis in a hot medium, particularly oil, and the knives are arranged to sweep directly past the die.

10. Device according to one of Claims 6 to 9, characterized in that the die head having a hollow hub (14) is secured relative to the drive shaft by a stud connection (20).

11. Device according to one of Claims 6 to 10, characterized in that the knife blades (10) are plane and the cutting edges (18) are made straight in a plane perpendicular to the hub axis.

12. Device according to one of Claims 6 to 11, characterized in that the hub is slotted particularly to 4 mm.

## Revendications

1. Procédé de fabrication de produits expansés, obtenus par extrusion et découpage avec application d' une pression réduite en sortie de buse, caractérisé en ce que les lames de coupe (10, 12) sont réglées de façon que leurs surfaces se trouvent disposées en hélice de bateau adaptée à produire une pression diminuée à l'endroit où l'extrudat sort de la buse.

2. Procédé selon la revendication 1, caractérisé par la mise en oeuvre d'une configuration en hélice de bateau adaptée à agir en traction.

3. Procédé selon l'une des revendications précédentes, caractérisé en ce que, l'on travaille avec des lames (pales) réglables.

4. Procédé selon l'une des revendications précédentes, caractérisé en ce que l'on travaille avec des lames (pales d'hélice) ayant des génératrices droites.

5. Application du procédé selon l'une des revendications précédentes à la fabrication d'un produit aliment, qui est utilisé en ce qu'une construction en hélice de bateau, conçue pour aire expansé.

6. Dispositif de fabrication de produits expansés, avec une extrudeuse comprenant une vis, une garniture de buse et des lames de coupe (10; 12), et un dispositif produisant une dépression dans la zone de sortie de buse, caractérisé en ce que les lames de coupe (10; 12) sont réalisées en forme de rayons, à la façon d'une hélice de bateau (figure 1, figure 2), et sont réglées autour d'un axe en rotation en faisant un angle tel, et leur profil étant configuré de telle façon, qu'une pression diminuée est produite à la sortie de buse de l'extrudat.

7. Dispositif selon la revendication 6, caractérisé en ce que la réalisation en hélice de bateau est faite sous forme de ce que l'on appelle une hélice travaillant en traction.

8. Dispositif selon la revendication 6 à 7, caractérisé en ce que plusieurs sorties de buse sont prévues dans un agencement concentrique autour de l'axe de lames et les lames, disposées également concentriquement par rapport à celui-ci, balayant à proximité immédiate des sorties de buse.

9. Dispositif selon l'une des revendications 6 à 8, caractérisé en ce que les buses sont disposées parallèlement à l'axe de lame dans un milieu chaud, en particulier de l'huile, et les lames sont disposées de façon à passer directement devant les buses.

10. Dispositif selon l'une des revendications 6 à 9, caractérisé en ce que la tête de buse comportant un moyeu creux (14) est fixée contre l'arbre d'entraînement au moyen d'une liaison à vissage goupillage (20).

11. Dispositif selon l'une des revendications 6 à 10, caractérisé en ce que les lames de coupe (10) sont planes et les arêtes de coupe (18) sont rectilignes, dans un plan perpendiculaire à l'axe de moyeu.

12. Dispositif selon l'une des revendications 6 à 11, caractérisé en ce que le moyeu est fendu, en particulier sur 4 mm.
